(19) Europäisches Patentamt
European Patent Office
Office européen des brevets

(11) EP 0 843 793 B1

(12) **EUROPÄISCHE PATENTSCHRIFT**

(45) Veröffentlichungstag und Bekanntmachung des Hinweises auf die Patenterteilung:
**09.08.2000 Patentblatt 2000/32**

(21) Anmeldenummer: **96919700.3**

(22) Anmeldetag: **07.05.1996**

(51) Int Cl.[7]: **F16K 11/07**

(86) Internationale Anmeldenummer:
**PCT/EP96/01907**

(87) Internationale Veröffentlichungsnummer:
**WO 97/06376 (20.02.1997 Gazette 1997/09)**

(54) **WEGEVENTIL**

DIRECTIONAL CONTROL VALVE

DISTRIBUTEUR

(84) Benannte Vertragsstaaten:
**DE FR GB IT**

(30) Priorität: **07.08.1995 DE 19528974**

(43) Veröffentlichungstag der Anmeldung:
**27.05.1998 Patentblatt 1998/22**

(73) Patentinhaber: **Mannesmann Rexroth AG**
**97816 Lohr am Main (DE)**

(72) Erfinder: **RÜB, Winfried**
**D-97816 Lohr (DE)**

(74) Vertreter: **Winter, Brandl, Fürniss, Hübner, Röss, Kaiser, Polte Partnerschaft**
**Patent- und Rechtsanwaltskanzlei**
**Alois-Steinecker-Strasse 22**
**85354 Freising (DE)**

(56) Entgegenhaltungen:
**EP-A- 0 073 886** **GB-A- 1 037 289**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 843 793 B1

## Beschreibung

Die Erfindung betrifft ein Wegeventil mit einer Rasteinrichtung zur Festlegung eines Wegeventilschiebers in zumindest einer Schaltstellung gemäß dem Oberbegriff des Patentanspruchs 1 und eine Rasteinrichtung für ein derartiges Wegeventil.

Derartige Ventileinrichtungen werden beispielsweise bei landwirtschaftlichen Fahrzeugen mit hydraulischen Zusatzeinrichtungen eingesetzt. Dabei sollen die gattungsgemäßen Ventilanordnungen einen Dreifachnutzen erfüllen, der darin besteht, daß über die Ventilanordnung die herkömmliche Ansteuerung des Hubzylinders eines Zusatzgerätes, wie beispielsweise eines Frontladers möglich ist. Ein weiterer Nutzen soll darin bestehen, daß über die Ventilanordnung ein weiteres Zusatzgerät, wie beispielsweise ein Hydraulikmotor ansteuerbar ist, bei dem die Hydraulikfluidzufuhr über das Wegeventil gesteuert wird, das in Abhängigkeit von der Drehrichtung des Hydraulikmotors in zwei Endlagen über eine Rasteinrichtung arretierbar sein soll. Der dritte Nutzen besteht schließlich darin, daß bei bestimmten Anwendungen die Rastfunktion aufgehoben werden soll, indem sie beispielsweise beim Erreichen der Endlage eines Hydraulikzylinders herausgestoßen wird. Dieses "Herausstoßen" wird üblicherweise als "Kickout" bezeichnet. Das heißt, durch die gattungsgemäße Ventilanordnung soll eine ständige Verrastung eines Ventilschiebers des Wegeventils, ein Aufheben der Verrastung bei Überschreiten eines vorgegebenen Lastdrucks und ein Modus, bei dem die Wirkung der Rasteinrichtung vollständig aufgehoben ist, ermöglicht werden.

In der EP 0 394 860 B1 ist eine Ventilanordnung mit einem Wegeventil und einer Rasteinrichtung offenbart, durch die der oben genannte Dreifachnutzen ermöglicht wird. Dazu ist im Wegeventilschieber eine Axialbohrung vorgesehen, in der ein Rastkolben eines Rastteils aufgenommen ist, über den Eingriffskörper durch die Umfangswandung des Wegeventilschiebers hindurch in entsprechende Nuten des Ventilgehäuses vorspannbar sind. Die Ansteuerung des Rastkolbens erfolgt über einen Ventilschieber einer Kickoutanordnung, über die ein Systemdruck zum Rastkolben führbar ist, um den Rasteingriff herzustellen. Bei Überschreiten eines vorbestimmten Systemdrucks wird über den Schieber der Kickoutanordnung eine Verbindung zu einem Tank geöffnet, so daß der am Rastkolben anliegende Druck entspannt und der Rasteingriff aufgehoben wird. Die Auslösekraft der Kickoutanordnung läßt sich über eine Stelleinrichtung von einer Bedienperson einstellen. Das heißt, bei der bekannten Ventilanordnung läßt sich durch entsprechendes Einstellen der Auslösekraft ein ständiges Verrasten, ein Herausstoßen (Kickout) bei Überschreiten eines vorgegebenen Steuerdrucks und eine Aufhebung der Rastung durch Einstellung einer minimalen Auslösekraft vorwählen.

Eine derartige Variante hat allerdings den Nachteil, daß der Schieber mit einer Axialbohrung zur Aufnahme des Rastkolbens und mit entsprechenden Verbindungsleitungen zu der im Ventilgehäuse aufgenommenen Kickoutanordnung versehen werden muß, wobei zur Fertigung aufgrund der geringen Größenabmessungen des Wegeventilschiebers ein erheblicher Aufwand erforderlich ist. Das gleiche gilt für die den Rasteingriff herstellenden Bauelemente, da diese sich durch die Umfangswandung des Wegeventilschiebers hindurch erstrecken müssen. Ein weiterer Nachteil des herkömmlichen Systems ist darin zu sehen, daß sich der Betriebszustand bei dem die Wirkung der Rasteinrichtung aufgehoben ist, nur dann möglich ist, wenn über die Stelleinrichtung eine entsprechende Auslösekraft an der Kickoutanordnung eingestellt wird, die ein sofortiges Auslösen der Kickoutanordnung sicherstellt. Das heißt, zur Einstellung dieses Zustandes muß von der Bedienperson im ungünstigsten Fall der gesamte Stellbereich der Stelleinrichtung, das heißt der Bereich von maximaler Auslösekraft bis zur minimalen Auslösekraft, durchfahren werden.

Auch die sonstigen bekannten Wegeventile mit Rasteinrichtungen können die oben beschriebenen Nachteile nicht überwinden.

So ist aus der GB-A-1227539 eine Ventilanordnung bekannt, bei der lediglich eine Verstellung zwischen einem ständigen Rasteingriff der Rasteinrichtung und einer Stellung, in der der Rasteingriff aufgehoben ist, möglich ist. Das heißt, eine Kickoutfunktion ist bei dieser bekannten Ventilanordnung nicht vorgesehen.

Aus der US-A-3132668 ist eine Ventilanordnung bekannt, bei der zwar eine Kickoutfunktion vorgesehen ist, von der Bedienperson jedoch keine Umschaltung zwischen einer Raststellung und einer Stellung, in der der Rasteingriff aufgehoben ist, vorgenommen werden kann.

Das Dokument EP 0 073 886, welches den nächstkommenden Stand der Technik darstellt, bezieht sich auf ein hydraulisches Steuergerät bei dem eine selbsttätige Entrastung eines Steuerschiebers möglich ist. Jedoch kann auch hier eine Bedienperson nicht zwischen der Raststellung und einer Stellung, in der der Rasteingriff aufgehoben ist, umschalten.

Demgegenüber liegt der Erfindung die Aufgabe zugrunde, ein Wegeventil mit einer Rasteinrichtung zur Festlegung eines Wegeventilschiebers und eine Anordnung für ein Wegeventil zu schaffen, bei denen bei minimalem vorrichtungstechnischen Aufwand allen Anforderungen an die Funktionen einer Rasteinrichtung Genüge getan ist.

Diese Aufgabe wird hinsichtlich des Wegeventils durch die Merkmale des Patentanspruchs 1 und hinsichtlich der Anordnung durch die Merkmale des Patentanspruchs 13 erfüllt.

Durch die Maßnahme, der Anordnung eine Schalteinrichtung zuzuordnen, über die einem Schieber der Kickoutanordnung ein Systemdruck zuführbar ist, der in gleicher Richtung wie eine Kickoutfeder des Schiebers wirkt, kann der am Schieber anliegende Steuerdruck übersteuert werden. Auf diese Weise ist die Kickoutfunktion aufhebbar, ohne daß die Einstellung der Stelleinrichtung - das heißt der Federvorspannung der Kickoutfeder - geändert wird. Die erfindungsgemäße Ausgestaltung der Ventilanordnung ermöglicht es somit, die Kickoutfunktion abzuschalten, ohne daß eine Änderung an der Stelleinrichtung vorgenommen wird. Nach einem darauffolgenden Einschalten der Kickoutfunktion, durch entsprechende Betätigung der Schalteinrichtung, wird die Kickoutanordnung mit ihrer ursprünglich eingestellten Kickoutfedervorspannung betrieben. Durch die erfindungsgemäße Maßnahme ist somit die Funktionssicherheit und die Bedienfreundlichkeit der Ventilanordnung gegenüber herkömmlichen Lösungen ganz erheblich verbessert worden.

Besonders vorteilhaft ist es, wenn der Rastkolben und der Schieber mechanisch gekoppelt werden, so daß beim Aufheben des Rasteingriffs über die Kickoutfunktion der Rastkolben durch den Schieber mitgenommen und aus seiner Raststellung bewegt wird. Bei dieser Variante ist es somit nicht erforderlich, ein ein Lösen des Rasteingriff bewirkendes Entlasten des Rastkolben von Steuerdruck herbeizuführen, so daß aufgrund der einfachen Gehäusekonstruktion der fertigungstechnische Aufwand erheblich vermindert wird.

Eine derartige Rasteinrichtung läßt sich unabhängig von einer Schalteinrichtung bei einem Wegeventil und bei anderen Anwendungen einsetzen.

Eine kompakte Einheit erhält man, wenn die Bauelemente der Ventilanordnung, das heißt das Rastteil, die Kickoutanordnung, die Stelleinrichtung und die Schalteinrichtung koaxial hintereinanderliegend in einer Ventilgehäusebohrung aufgenommen sind. Durch diese Variante muß nur eine vergleichsweise einfach aufgebaute Ventilgehäusebohrung vorgesehen werden, während der Wegeventilschieber als Vollkolben ausgebildet werden kann.

Die Federrate einer Kickoutfeder läßt sich auf ein Minimum reduzieren, indem der Rastkolben mit einem geringeren Durchmesser als der Schieber ausgeführt wird, so daß sich eine Kolbeneinheit in Form eines Stufenkolbens ergibt. Durch diesen Aufbau wird erreicht, daß der Kickoutfeder lediglich noch die Resultierende aus den Druckkräften auf die Stirnfläche des Rastkolbens und des Schiebers entgegenwirkt.

Eine besonders einfach aufgebaute Ventilanordnung erhält man, wenn die Schalteinrichtung als 3/2-Wegeventil ausgeführt wird, das in einer ersten Schaltstellung den Systemdruck mit der Schieberrückseite verbindet und in seiner zweiten Schaltstellung die Schieberrückseite druckentlastet, indem diese beispielsweise mit einem Tank verbunden wird.

Eine besonders einfach aufgebaute, vormontierbare Einheit erhält man, wenn der Rastkolben und der Schieber in einer gemeinsamen Buchse aufgenommen sind, die ihrerseits drehbar im Ventilgehäuse aufgenommen ist und die einen Drehschieber der Schalteinrichtung darstellt. Auf diese Weise kann die vormontierte Einheit als vorprüfbare Baugruppe ausgebildet werden, so daß die Fertigung des erfindungsgemäßen Wegeventils weiter vereinfacht ist. Eine derartige vorprüfbare Baugruppe ist auch Gegenstand des nebengeordneten Patentanspruchs 13.

In einer vom vorhergehenden Ausführungsbeispiel abweichenden Variante, kann die Buchse lediglich zur Aufnahme von Schieber und Schalteinrichtung vorgesehen sein, während der Rastkolben in einer Ventilgehäusebohrung aufgenommen ist, die sich in Verlängerung der Buchse erstreckt.

Um ein sofortiges Aufheben des Rasteingriffs bei Druckschwankungen am Schieber zu verhindern, können Rastkolben und Schieber über eine Zugstange miteinander verbunden sein, die im Rastkolben verankert ist, und die erst nach einem vorbestimmten Tothub des Schiebers in Anlage an diesen gelangt, so daß erst nach dem Tothub die mechanische Kopplung von Rastkolben und Schieber erfolgt.

Vorzugsweise werden der Steuerdruck und der Systemdruck von einem Arbeitsanschluß des Wegeventils abgegriffen.

Eine besonders kompakte und einfach herstellbare Einheit erhält man, wenn die Achse der Rasteinrichtung etwa rechtwinklig zur Achse des Wegeventilschiebers verläuft, so daß die Ventilbohrung zur Aufnahme der Buchse etc. als Radialbohrung zur Wegeventilbohrung ausgeführt wird.

Die Vorspannkraft der Rastfeder läßt sich auf einen vorbestimmten, konstanten Druck halten, indem der Rastkolben in seiner Raststellung an einem mechanischen Anschlag anliegt.

Die Weiterbildungen gemäß den Unteransprüchen 14 und 15 ermöglichen eine optimale Anpassung an ein Wegeventil wie es in den Ansprüchen 1 bis 12 beschrieben ist.

Weitere vorteilhafte Weiterbildungen der Erfindung sind Gegenstand der sonstigen Unteransprüche.

Bevorzugte Ausführungsbeispiele der Erfindung werden im folgenden anhand schematischer Zeichnungen näher erläutert.

Es zeigen:

Fig. 1 ein Schaltschema eines erfindungsgemäßen Wegeventils mit Rasteinrichtung;

Fig. 2 eine konkrete Ausführungsform eines Wegeventils mit Rasteinrichtung gemäß Fig. 1;

Fig. 3 einen Schnitt entlang der Linie A-A in Fig. 2 und

Fig. 4 eine weitere konkrete Ausführungsform mit einer abgewandelten Rasteinrichtung.

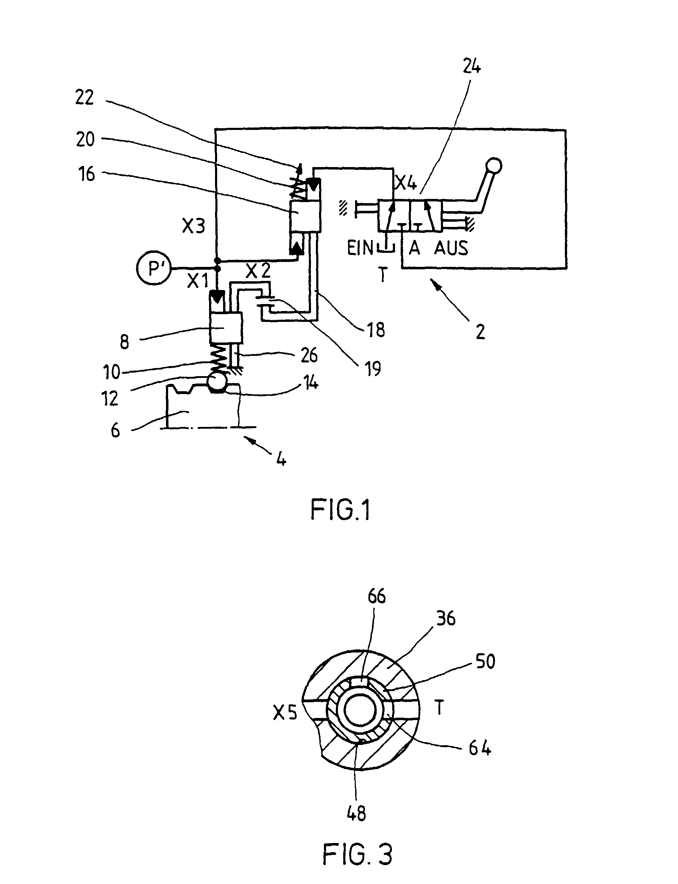

In Fig. 1 ist das hydraulische Schaltschema einer Rasteinrichtung 2 für ein Wegeventil 4 dargestellt, von dem lediglich der Wegeventilschieber 6 angedeutet ist. Demgemäß hat die Rasteinrichtung 2 ein Rastteil 8, dessen Rastkolben über eine Rastfeder 10 auf ein Eingriffsteil, beispielsweise eine Rastkugel 12 wirkt, die in Eingriff bringbar ist mit einer Rastnut 14 des Wegeventilschiebers 6. Des weiteren hat die Rasteinrichtung 2 eine Kickoutanordnung 16, deren Schieber über eine Kopplungseinrichtung 18 mechanisch mit dem Rastkolben des Rastteils 8 verbunden ist. Die Kopplungseinrichtung 18 hat beispielsweise eine Zugstange, die nach einem Tothub auf einen Anschlag 19 aufläuft, so daß dann der Rastkolben mitgenommen wird.

Zur Ansteuerung des Rastteils 8 und der Kickoutanordnung 16 wird von einem Anschluß des Wegeventils 6 ein Systemdruck p' abgeführt, der über Steuerdruckleitungen $X_1$, $X_2$ zur von der Rastfeder 10 abgewandten Stirnseite des Rastkolbens des Rastteils 8 bzw. zur gegenüberliegenden Stirnseite des Schiebers der Kickoutanordnung 16 geführt ist. Die andere Stirnseite des Schiebers der Kickoutanordnung 16 ist über eine Kickoutfeder 20 vorgespannt, deren Vorspannung über eine Stelleinrichtung 22 veränderbar ist. Des weiteren ist von der Federseite des Kickoutschiebers eine weitere Steuerleitung $X_4$ zu einem 3/2-Wegeventil geführt, das als Schalteinrichtung 24 wirkt.

In einer ersten Schaltstellung a verbindet die Schalteinrichtung 24 die Steuerleitung $X_4$ mit einem Tank T, während ein Anschluß A abgesperrt ist. An dem Anschluß A liegt über eine Steuerleitung $X_3$ der Systemdruck p' an.

In der zweiten Schaltstellung b ist der Tankanschluß T abgesperrt, während die Steuerleitungen $X_3$ und $X_4$ miteinander verbunden sind so daß an der Federseite des Kickoutschiebers der Systemdruck p' anliegt. Der Systemdruck p' ist auch über die Steuerleitungen $X_1$ und $X_2$ an die einander gegenüberliegenden Stirnseiten des Rastkolbens (Rastteil 8) und des Kickoutschiebers geführt. In der Schaltstellung b heben sich somit die an beiden Stirnseiten des Kickoutschiebers anliegenden Systemdrücke p' etwa auf, so daß der Kickoutschieber ständig über die Kickoutfeder 20 in seine Raststellung vorgespannt ist. Des weiteren wirkt der Systemdruck p' über die Steuerleitung $X_1$ auf den Rastkolben 8, so daß dieser gegen einen Anschlag 26 gedrückt wird, so daß die Rastfeder 10 mit einer vorbestimmten Federkraft vorgespannt ist und die Rastkugel 12 in die Rastnut 14 drückt. Da in der Schaltstellung b der Schalteinrichtung 24 der Kickoutschieber 16 immer in seine Raststellung (nach unten in Fig. 1) vorgespannt ist, ist die Kickoutfunktion in dieser Schaltstellung ausgeschaltet, solange ein Systemdruck p' anliegt.

Beim manuellen Verschieben des Schiebers der Schalteinrichtung 24 in die Schaltstellung a wird die Steuerleitung $X_4$ mit dem Tank T verbunden, so daß die Federseite des Kickoutschiebers nicht mehr mit dem Systemdruck p' beaufschlagt ist und nur noch durch die Wirkung der Rastfeder 10 in seine Raststellung vorgespannt wird. Beim Überschreiten eines vorgegebenen Systemdrucks p' in der Steuerleitung $X_2$ wird der Kickoutschieber gegen die Wirkung der Rastfeder 10 ausgelenkt, wobei die Bewegung des Kickoutschiebers 20 nach dem Auflaufen auf den Anschlag 19 über die Kopplungseinrichtung 18 auf den Rastkolben des Rastteils 8 übertragen wird, so daß sich dieser weg vom Anschlag 26 bewegt. Dabei wird die Federvorspannung der Rastfeder 10 aufgehoben, so daß die Rastkugel 12 nicht mehr in Eingriff mit der Rastnut 14 steht und die Rastfunktion aufgehoben ist. Das heißt, in der Schaltstellung a der Schalteinrichtung 24 wird die Kickoutfunktion der Rasteinrichtung 2 durch die Vorspannung der Kickoutfeder 20 bestimmt.

Es ist bei dieser Variante nicht erforderlich, zum Rastkolben des Rastteils 8 eine Steuerdruckleitung zu führen, die eine Rückstellung des Rastkolbens bei Überschreiten eines Schwelldrucks herbeiführt.

Die Rastfunktion läßt sich schließlich vollständig aufheben, indem die Vorspannung der Kickoutfeder 20 über die Stelleinrichtung 22 auf ein Minimum reduziert wird, so daß der Rastkolben ständig über die Kopplungseinrichtung 18 und den Kickoutschieber aus seiner Raststellung herausgezogen ist.

Durch die direkte Ankopplung von Rastkolben und Kickoutschieber wird eine Schaltung zur Verfügung gestellt, die bei einfachem Aufbau ein hervorragendes Ansprechverhalten zeigt.

In Abwandlung von dem in Fig. 1 dargestellten Ausführungsbeispiel kann anstelle einer handbetätigten Schalteinrichtung 24 auch eine Fernbedienung vorgesehen sein, so daß die Kickoutfunktion über eine Anlagensteuerung etc. zu- oder abschaltbar ist.

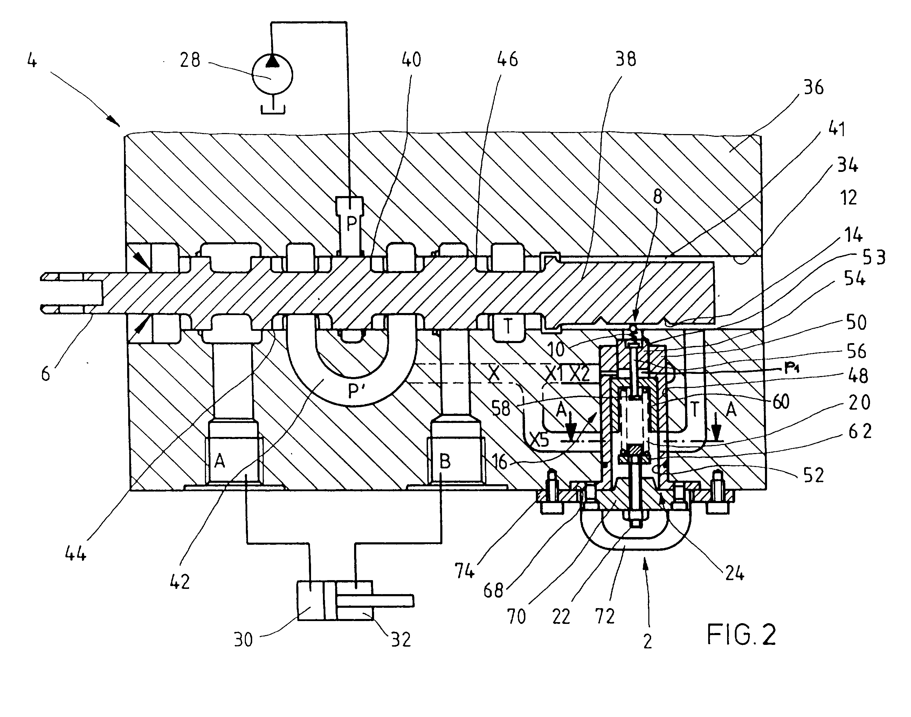

In Fig. 2 ist ein konkretes Ausführungsbeispiel eines Wegeventils 4 mit einer Rasteinrichtung 2 dargestellt.

Das Wegeventil 4 ist beim gezeigten Ausführungsbeispiel als 4/3-Wegeventil ausgebildet, an dessen Anschluß P ein über eine Pumpe 28 aufgebrachter Pumpendruck anliegt.

Die Arbeitsanschlüsse A und B sind zu Verbrauchern geführt, wobei beim gezeigten Ausführungsbeispiel ein Hubzylinder dargestellt ist. Dabei sind die Arbeitsanschlüsse A und B an die Zylinderbodenseite 30 bzw. die Zylinderstangenseite 33 des Arbeitszylinders geführt, so daß die Zylinderräume 30, 32 wechselweise mit Hydraulikfluid beaufschlagbar sind, um den Hubkolben zu bewegen. Der jeweils andere Zylinderraum (30 bzw. 32) ist mit einem Tankanschluß T verbindbar, so daß bei einer entsprechenden Kolbenbewegung das sich im verkleinernden Zylinderraum befindliche Hydraulikfluid über den Tank T entspannbar ist.

Der Wegeventilschieber 6 ist in einer Ventilbohrung 34 eines Ventilgehäuses 36 geführt, wobei der Wegeventilschieber 6 über nicht gezeigte Rückstellfedern in seine in Fig. 2 dargestellte Neutralstellung vorgespannt ist und über eine nicht gezeigte Verschiebeeinrichtung in seine Schaltstellungen verschiebbar ist.

Ein in Fig. 2 rechts liegender Endabschnitt des Wegeventilschiebers 6 ragt in einen Endabschnitt 38 der Ventilbohrung 34 vor, wobei der Durchmesser des Endabschnitts 38 geringer ist, als der Durchmesser der Ventilbohrung 34 in diesem Abschnitt, so daß ein Ringspalt 41 entsteht.

An dem Endabschnitt 38 sind zwei im Axialabstand zueinander stehende Rastnuten 14 ausgebildet, über die der Wegeventilschieber 6 in denjenigen beiden Schaltstellungen arretierbar ist, in denen der Arbeitsanschluß A oder der Arbeitsanschluß B mit dem Hubzylinder verbunden sind.

Auf die Beschreibung der verschiedenen Ringräume des Ventilgehäuses 36 und der Ringnuten des Wegeventilschiebers 6 kann an dieser Stelle verzichtet werden, da dies für die Funktion der Rasteinrichtung unerheblich ist.

Durch Verschiebung des Wegeventilschiebers 6 aus seiner gezeigten Neutralposition nach links (Ansicht nach Fig. 2) wird über eine Steuerkante 40 eine Verbindung zwischen dem Pumpenanschluß P und einem Verbindungskanal 42 geöffnet und über eine Steuerkante 44 eine Verbindung vom Verbindungskanal 42 zum Steueranschluß A hergestellt, so daß die Zylinderbodenseite 30 mit Hydraulikfluid beaufschlagt wird. Gleichzeitig wird über eine Steuerkante 46 eine Verbindung zwischen dem Tankanschluß T und dem Arbeitsanschluß B aufgesteuert, so daß die Zylinderstangenseite 32 mit dem Tank T verbunden wird.

Umgekehrt wird bei einer Verschiebung des Wegeventilschiebers 6 in Fig. 2 nach rechts die Verbindung zwischen dem Pumpenanschluß P und dem Arbeitsanschluß B aufgesteuert, so daß die Zylinderstangenseite 32 mit Hydraulikfluid beaufschlagt wird, während die Zylinderbodenseite 30 über den Arbeitsanschluß A mit dem Tankanschluß T verbunden ist.

In diesen beiden Endschaltstellungen des Wegeventilschiebers 6 greift die Rastkugel 12 der Rasteinrichtung 2 in die rechte bzw. linke Rastnut 14 am Endabschnitt 38 des Wegeventilschiebers 6 ein, so daß bei entsprechender Vorspannung der Rastkugel 12 der Wegeventilschieber 6 in der jeweiligen Endposition festgelegt ist.

Wie aus der Darstellung nach Fig. 2 hervorgeht, ist die Rasteinrichtung 2 als modulartige Ventilanordnung ausgebildet, deren Längsachse rechtwinklig zur Ventilschieberachse verläuft. Die gesamte Rasteinrichtung 2 ist in einer Querbohrung 48 des Ventilgehäuses 36 aufgenommen. Bei dem in Fig. 2 gezeigten Ausführungsbeispiel ist die Querbohrung 48 zur Ventilbohrung 34 hin stufenförmig verjüngt, wobei im erweiterten Abschnitt der Querbohrung 48 eine Buchse 50 drehbar aufgenommen ist.

Die Buchse 50 hat ihrerseits wiederum eine zur Ventilbohrung 34 hin stufenförmig verjüngte Führungsbohrung 52, wobei der verjüngte Führungsbohrungsabschnitt 52 den gleichen Durchmesser wie der verjüngte Abschnitt der Querbohrung 48 aufweist, der sich in Verlängerung der Führungsbohrung 52 erstreckt.

In diesem verjüngten Abschnitt der Führungsbohrung 52 ist der Rastkolben 54 des Rastteils 8 geführt, an dessen in Fig. 2 oben liegender Stirnseite die Rastfeder 10 abgestützt ist, die ihrerseits wiederum die Rastkugel 12 gegen den Endabschnitt 38 des Wegeventilschiebers 6 verspannt. In der in Fig. 2 gezeigten Grundposition (Raststellung) liegt der Rastkolben 54 an einer Schulter 53 der Querbohrung 48 an, so daß die Federvorspannung der Rastfeder 10 begrenzt ist.

Des weiteren ist im Rastkolben 54 eine Zugstange 56 befestigt, die koaxial zur Querbohrungsachse angeordnet ist und deren von der Rastfeder 10 entfernter Endabschnitt frei aus dem Rastkolben 54 auskragt und dort mit einem Mitnahmebund 58 versehen ist.

In dem radial erweiterten Abschnitt der Führungsbohrung 52 ist ein tassenförmiger Schieber 60 der Kickoutanordnung 16 geführt, dessen Stirnseite von der Zugstange 56 durchsetzt ist, so daß der radial erweiterte Mitnahmebund 58 in dem Innenraum des Schiebers 60 aufgenommen ist. Dieser ist über die Kickoutfeder 20 gegen die Radialschulter der Führungsbohrung 52 vorgespannt, wobei sich die Kickoutfeder 20 an der Innenstirnseite des Schiebers 60 abstützt. Die andere Seite der Kickoutfeder 20 liegt an einem Federteller 62 an, dessen Axialabstand zur Innenstirnfläche des Schiebers 60 über die Stelleinrichtung 22 einstellbar ist, die als Gewindebolzen ausgeführt ist, der in ein in Axialrichtung festliegendes Gehäuseteil 70 eingeschraubt ist. Das heißt, durch Verstellen der Stelleinrichtung 22 läßt sich die Federvorspannung der Kickoutfeder 20 variieren.

Der Mitnahmebund 58 ist in seiner dargestellten Ausgangsposition im Axialabstand zur Innenstirnfläche des Schiebers 60 angeordnet, so daß bei einer Axialbewegung des Schiebers 60 in der Darstellung nach Fig. 2 nach unten dieser erst nach einem vorbestimmten Axialvorschub in Anlage an den Mitnahmebund 58 gerät.

Wie weiterhin aus Fig. 2 hervorgeht, sind der Rastkolben 54 und der Schieber 60 im Ausgangszustand in einem Axialabstand zueinander angeordnet, so daß von diesen beiden Bauelementen ein Zylinderraum aufgespannt wird, in den die Steuerleitung $X_1$, $X_2$ mündet, die als Radialdrosselbohrung in der Buchse 50 ausgebildet ist. Die Steuerleitung $X_1$, $X_2$ mündet in eine Verbindungsbohrung X, über die der Systemdruck p' im Verbindungskanal 42 abgreifbar ist. Dieser Systemdruck p' entspricht im wesentlichen dem Arbeitsdruck an den Anschlüssen A, B des Wegeventils 4. Die Verbindungsbohrung X ist im Bereich der Querbohrung 48 zu einem Ringraum erweitert, der die Querbohrung und damit die Buchse 50 in Umfangsrichtung umschließt. Von der Verbindungsbohrung X zweigt eine Steuerleitung X5 ab, die im Axialabstand zur Steuerleitung $X_1$, $X_2$ an die Buchse 50 geführt ist.

An der diametral gegenüberliegenden Seite der Buchse 50 ist eine weitere Verbindungsleitung im Ventilgehäuse 36 ausgebildet, über die eine Verbindung mit dem Tank T erfolgt.

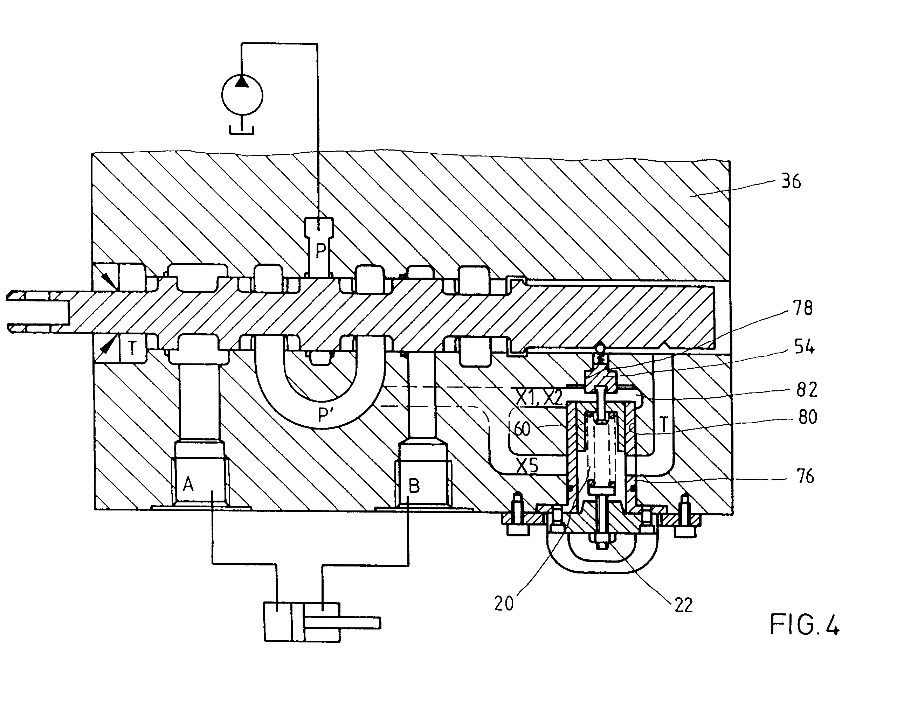

Fig. 3 zeigt eine Schnittdarstellung entlang der Buchse 50 der Linie A-A in Fig. 2. Daraus geht hervor, daß in der drehbar in der Querbohrung 48 aufgenommenen Buchse 50 zwei rechtwinklig zueinander angeordnete Radialbohrungen 64, 66 ausgebildet sind, von denen die erste Radialbohrung 64 in der gezeigten Drehposition der Buchse 50 in Verlängerung des Tankanschlusses T verläuft, während die zweite Radialbohrung 66 etwa rechtwinklig zur ersten Radialbohrung 64 angeordnet ist und in dem gezeigten Schaltzustand durch die Umfangswandung der Querbohrung 48 verschlossen ist.

Bei einer Verdrehung der Buchse 50 um 90° gegen den Uhrzeigersinn in Fig. 3 wird die zweite Radialbohrung 66 mit Bezug zur Steuerleitung $X_5$ ausgerichtet, während die erste Radialbohrung 64 abgeschlossen wird.

In Abhängigkeit von der Schaltstellung der Buchse 50 wird somit die Federseite des Schiebers 60 einmal mit dem Tank T (Schaltstellung in Fig. 3) verbunden oder in der anderen Schaltstellung mit der Steuerleitung $X_5$ verbunden, so daß an der Federseite des Schiebers 60 der angedrosselte Systemdruck anliegt, der auch über die Steuerleitung $X_1$, $X_2$ dem Raum zwischen Rastkolben 54 und Schieber 60 zugeführt wird.

An der in Fig. 2 unten liegenden Stirnseite der Buchse 50 ist ein Befestigungsflansch 68 ausgebildet, auf dem ein Abdeckjoch 70 befestigt ist, durch das sich die Gewindestange der Stelleinrichtung 22 erstreckt. Das Abdeckjoch 70 trägt eine Handhabe 72, über die die Buchse 50 in seine beiden Schaltstellungen verdrehbar ist, wobei der Drehwinkel etwa 90° beträgt.

Anstelle der Handhabe 72 kann auch eine entsprechende ferngesteuerte, beispielsweise elektromotorisch oder hydraulisch betriebene Betätigungseinrichtung eingreifen. Die drehbare Buchse 50 ist über Axialanschläge 74 in Axialrichtung im Ventilgehäuse 36 festgelegt, wobei die Axialanschläge 74 selbstverständlich die Drehbewegung der Buchse 50 erlauben.

Bei dem gezeigten Ausführungsbeispiel wirkt die Buchse 50 somit als Drehschieber eines Drehventils, über den wahlweise die Federseite des Schiebers 60 der Kickoutanordnung 16 mit einem Tank T oder mit dem Systemdruck p' verbindbar ist.

Bei der in Fig. 3 dargestellten Stellung ist die Kickoutfunktion der Kickoutanordnung 16 durch die Federvorspannung der Rastfeder 20 bestimmt, während in der anderen Schaltstellung (zweite Radialbohrung 66 mit Bezug zur Steuerleitung $X_5$ ausgerichtet) die Kickoutfunktion ausgeschaltet ist.

Die Auslösekraft der Kickoutanordnung wird über eine entsprechende Einstellung der Stelleinrichtung 22 und somit der Federvorspannung der Kickoutfeder 20 vorgewählt, über die der Schieber 60 gegen die Radialschulter der Führungsbohrung 52 vorgespannt ist. Bei der entsprechenden Auslenkung des Wegeventilschiebers 6 greift die Rastkugel 12 in eine der Rastnuten 14 ein, wobei der Rastkolben über den durch die Steuerleitung $X_1$, $X_2$ zugeführten Systemdruck gegen die Schulter 53 gedrückt wird, so daß die Rastfeder 10 entsprechend vorgespannt ist.

Beim Überschreiten eines vorbestimmten Systemdrucks wird die Vorspannkraft der Kickoutfeder 20 überwunden, so daß der Schieber 60 in der Darstellung nach Fig. 2 nach unten gedrückt wird. Nach einer vorbestimmten Axialbewegung gelangt die Innenstirnfläche des Schiebers 60 in Anlage an den Mitnahmebund 58, so daß der Rastkolben 54 aus seiner Raststellung herausgezogen wird, so daß die Rastkugel 12 außer Eingriff kommt und der Wegeventilschieber 6 wieder frei bewegbar ist.

Der Kickoutdruck S, der zur Auslösung der Kickoutanordnung erforderlich ist, berechnet sich nach der Formel:

$$S = F_{K0} \cdot \frac{4}{(D_2^2 - D_1^2) \cdot \pi}$$

wobei $F_{KO}$ die Federkraft ist während $D_2$ der Durchmesser des Schiebers 60 und $D_1$ der Durchmesser des Rastkolbens 54 ist.

Wie aus dieser Formel hervorgeht, läßt sich durch die stufenförmige Ausbildung der Kolbenanordnung (Schieber 60, Rastkolben 54) eine Kickoutfeder 20 mit vergleichsweise geringer Federkonstante einsetzen, da die zu steuernden Kräfte und Drücke gering sind.

Die gesamte Rasteinrichtung 2, die im wesentlichen aus der drehbaren Buchse 50 und den darin geführten Bauelementen (Schieber 60, Rastkolben 54, Stelleinrichtung 22 etc.) besteht, kann als vorprüfbare Baugruppe ausgebildet werden, die unabhängig vom Wegeventil montier- und prüfbar ist.

Da die Rückstellbewegung des Rastkolbens 54 über die Zugstange 56 und durch die Axialverschiebung des Schiebers 60 erfolgt, muß keine eigene Steuerdruckbohrung vorgesehen werden, um diese Rückstellung des Rastkolbens 54 zu bewerkstelligen - dadurch läßt sich der Arbeitsaufwand zur Herstellung des Wegeventils minimieren.

Ein weiterer Vorteil des vorbeschriebenen Ausführungsbeispiels besteht in dem äußerst einfachen Aufbau der Querbohrung 48, da diese eine einfache Geometrie und eine geringe Axiallänge aufweist, so daß diese auf einfache Weise als geriebene Bohrung ausgebildet werden kann. Aufgrund der geringen Federkräfte ($F_{KO}$) ist die Montage und die Wartung im Einsatz sehr einfach, da zur Vorspannung keine Spezialwerkzeuge benötigt werden.

In Fig. 4 ist ein weiteres Ausführungsbeispiel eines erfindungsgemäßen Wegeventils 4 mit einer Rasteinrichtung 2 dargestellt.

Dieses Ausführungsbeispiel unterscheidet sich im wesentlichen von dem Ausführungsbeispiel aus den Fig. 2 und 3 durch die Ausgestaltung der Buchse und der Querbohrung.

Alle anderen Bauelemente entsprechen weitestgehend dem vorbeschriebenen Ausführungsbeispiel, so daß auf deren Beschreibung verzichtet werden kann. Einander entsprechende Bauelemente sind in den Fiq. 2 und 4 mit den gleichen Bezugszeichen versehen.

In Abweichung von dem zuvor beschriebenen Ausführungsbeispiel ist die als Drehschieber wirkende Buchse 76 mit kürzerer Axiallänge ausgeführt, so daß der Rastkolben 54 nicht mehr in der Buchse 50, sondern nur noch in einem verjüngten Querbohrungsteil 78 geführt ist, das sich in Verlängerung eines radial erweiterten Querbohrungsabschnitts 80 erstreckt. In diesem radial erweiterten Querbohrungsabschnitt 80 ist die Buchse 76 drehbar aufgenommen, wobei zu deren Umfangswandung wiederum eine Steuerleitung $X_5$ und eine Tankleitung T geführt sind.

Innerhalb der Buchse 76 ist wiederum der Schieber 60 der Kickoutanordnung geführt, der auf gleiche Weise wie beim vorbeschriebenen Ausführungsbeispiel über die Stelleinrichtung 22 und die Kickoutfeder 20 vorspannbar ist. Die beiden Querbohrungsabschnitte 78 und 80 münden jeweils in einen Ringraum 82, der in Verlängerung der Steuerleitung X1, X2 ausgebildet ist.

Des weiteren ist bei diesem Ausführungsbeispiel der Wegeventilschieber 6 in seiner dargestellten Neutralstellung durch die Rasteinrichtung 2 festgelegt, die Wahl der Raststellung ist jedoch selbstverständlich beliebig, so daß auf gleiche Weise wie beim vorbeschriebenen Ausführungsbeispiel die Raststellungen den beiden Endstellungen des Wegeventilschiebers zugeordnet sein können.

Das in Fig. 4 dargestellte Ausführungsbeispiel hat eine etwas einfacher aufgebaute Buchse 76, da diese nicht mehr mit der stufenförmigen Verjüngung zur Aufnahme des Rastkolbens 54 ausgebildet werden muß. Auf der anderen Seite hat diese Variante den Nachteil, daß die Rasteinrichtung 2 nur mit höherem Aufwand als vorprüfbare Einheit vormontiert werden kann, da die Führung des Rastkolbens 54 durch das Ventilgehäuse 36 des Wegeventils erfolgt.

Die Funktionsweise entspricht derjenigen des vorbeschriebenen Ausführungsbeispiels, so daß auf eine nochmalige Beschreibung verzichtet werden kann.

Beide Varianten haben den Vorteil gemeinsam, daß die Kickoutfunktion der Venti anordnung ausgeschaltet werden kann, ohne daß die Federvorspannung der Kickoutfeder 20 verändert wird. Des weiteren sind aufgrund der axialen Anordnung von Rastteil 8, Kickoutanordnung 16, Stelleinrichtung 22 und Schalteinrichtung 24 der vorrichtungstechnische Aufwand und der Platzbedarf minimal.

Die Gehäusebearbeitung ist sehr einfach, so daß auch die Fertigungskosten auf ein Minimum reduzierbar sind. Des weiteren erlaubt die erfindungsgemäße Ausgestaltung der Schalteinrichtung eine Fernbedienung, die eine weitergehende Automatisierung der Einrichtung erlaubt.

Da Rastkolben und Schieber mechanisch gekoppelt sind, müssen keine Steuerleitungen für die Betätigung des Rastkolbens vorgesehen werden.

**Patentansprüche**

**1.** Wegeventil mit einer Rasteinrichtung (2) zur Festlegung eines Wegeventilschiebers (6) in zumindest einer Schaltstellung, wobei die Rasteinrichtung (2) ein Rastteil (8) hat, mittels dessen Rastkolben (54) ein Eingriffsteil (12) über eine Rastfeder (10) in seine Raststellung vorspannbar ist und mit einer Kickoutanordnung (16), deren Schieber (60) mit einem Steuerdruck (pl) beaufschlagbar ist, um den Rasteingriff aufzuheben, wobei der Kickoutanordnung (16) eine auf eine Kickoutfeder (20) wirkende Stelleinrichtung (22) zugeordnet ist, über die eine Auslösekraft der Kickoutanordnung (16) voreinstellbar ist, *gekennzeichnet durch* eine Schalteinrichtung (24), durch die dem Schieber (60) ein Systemdruck (p') zuführbar ist, der dem Steuerdruck (pl) entgegenwirkt, so daß der Schieber (60) unabhängig von der Einstellung der Stelleinrichtung (22) in einer der Raststellung des Rastkolbens (54) zugeordneten Lage verbleibt.

**2.** Wegeventil nach Patentanspruch 1, dadurch gekennzeichnet, daß der Rastkolben (54) und der Schieber (60) mechanisch gekoppelt sind.

**3.** Wegeventil nach Patentanspruch 1 oder 2, dadurch gekennzeichnet, daß der Rastkolben (54), der Schieber (60) die Stelleinrichtung (22) und die Schalteinrichtung (24) vorzugsweise koaxial zueinanderliegend in einer Gehäusebohrung (48) aufgenommen sind.

**4.** Wegeventil nach Patentanspruch 3, dadurch gekennzeichnet, daß der Durchmesser des Rastkolbens (54) kleiner ist, als derjenige des Schiebers (60) und daß der Steuerdruck (pl) an die zueinander benachbarten Stirnseiten des Rastkolbens (54) und des Schiebers (60) geführt ist.

**5.** Wegeventil nach Patentanspruch 3 oder 4, dadurch gekennzeichnet, daß die Schalteinrichtung (24) ein 3/2-Wegeventil ist, das in seiner ersten Schaltstellung (a) die Schieberrückseite druckentlastet und in seiner zweiten Schaltstellung (b) die Schieberrückseite mit dem Systemdruck (p') beaufschlagt.

**6.** Wegeventil nach Patentanspruch 5, dadurch gekennzeichnet, daß der Schieber (60) und vorzugsweise die Stelleinrichtung (22) in einer Buchse (50) geführt sind, die ihrerseits drehbar im Gehäuse (36) gelagert ist und einen Drehschieber des Wegeventils bildet.

**7.** Wegeventil nach Patentanspruch 6, dadurch gekennzeichnet, daß der Rastkolben (54) ebenfalls in der Buchse (50) geführt ist.

**8.** Wegeventil nach einem der Patentansprüche 2 bis 7, dadurch gekennzeichnet, daß der Rastkolben (54) und der Schieber (60) über eine Zugstange (56) verbunden sind, die im Rastkolben (54) befestigt ist, und die einen Mitnahmebund (58) hat, der in einem Axialabstand zu einer Anschlagsfläche des Schiebers (60) ausgebildet ist, so daß dieser nach einem vorbestimmten Tothub in Anlage an den Mitnahmebund (58) bringbar ist.

**9.** Wegeventil nach einem der Patentansprüche 4 bis 8, dadurch gekennzeichnet, daß der Steuerdruck (pl) und der Systemdruck (p') gleich dem Systemdruck an einem Arbeitsanschluß (A, B) des Wegeventils (4) sind.

**10.** Wegeventil nach einem der vorhergehenden Patentansprüche, dadurch gekennzeichnet, daß die Axialbewegung von Rastkolben (54) und Schieber (60) rechtwinklig zur Axialbewegung des Wegeventilschiebers (6) angeordnet ist.

**11.** Wegeventil nach einem der vorhergehenden Patentansprüche, dadurch gekennzeichnet, daß der Rastkolben (54) über den Steuerdruck (pl) gegen einen mechanischen Anschlag (26) vorgespannt ist.

**12.** Wegeventil nach einem der vorhergehenden Patentansprüche, dadurch gekennzeichnet, daß die Schalteinrichtung (24) über eine Fernbedienung betätigbar ist.

**13.** Anordnung bestehend aus einer Rasteinrichtung, einer Kickoutanordnung (16) und einer Schalteinrichtung (24), wobei die Rasteinrichtung (2) ein Rastteil (8) hat, mittels dessen Rastkolben (54) ein Eingriffsteil (12) über eine Rastfeder (10) in seine Raststellung vorspannbar ist, wobei ein Schieber (60) der Kickoutanordnung (16) mit einem Steuerdruck (pl) beaufschlagbar ist, um den Rasteingriff aufzuheben, und der Kickoutanordnung (16) eine auf eine Kickoutfeder (20) wirkende Stelleinrichtung (22) zugeordnet ist, über die eine Auslösekraft der Kickoutanordnung (16) voreinstellbar ist,

wobei durch die Schalteinrichtung (24) dem Schieber (60) ein Systemdruck (p') zuführbar ist, der dem Steuerdruck (pl) entgegenwirkt, so daß der Schieber (60) unabhängig von der Einstellung der Stelleinrichtung (22) in einer der Raststellung des Rastkolbens (54) zugeordneten Lage verbleibt, und
wobei der Rastkolben (54) und der Schieber (60) über eine Zugverbindung (56) miteinander gekoppelt sind.

**14.** Anordnung nach Anspruch 13, wobei der Rastkolben (54) einen geringeren Durchmesser als der Schieber (60) hat, über einen Steuerdruckanschluß ($X_1$ , $X_2$) die zueinander benachbarten Stirnseiten von Schieber (60) und Rastkolben (54) mit einem Steuerdruck (pl) beaufschlagbar sind, und die Kickoutanordnung (16) eine Kickoutfeder (20) aufweist, die auf eine zum Rastkolben (54) entgegengesetzt liegende Stirnseite des Schiebers (60) wirkt.

**15.** Anordnung nach Anspruch 14, wobei der Rastkolben (54), der Schieber (60), die Stelleinrichtung (22) und ein Stellglied (50) der Schalteinrichtung (24) im wesentlichen in einer gemeinsamen Ventilbohrung (48) angeordnet sind.

**Claims**

**1.** A directional control valve having snap-locking means (2) for retaining the slide (6) of a directional control valve in at least one switching position, with the snap-locking means (2) including an engagement part (8) whose snap-locking piston (54) enables biasing of an engagement member (12) into its engagement position by means of a detent spring (10), and including a kick-out arrangement (16) to the slide (60) of which a control pressure (p1) may be applied to cancel the locking engagement, and with the kick-out arrangement (16) being associated with setting means (22) which act on a kick-out spring (20) and whereby a triggering force for the kick-out arrangement (16) may be preset, *characterised by* switching means (24) whereby a system pressure (p') counteracting the control pressure (p1) may be supplied to the slide (60) so that the slide (60), independently of the setting of the setting means (22), remains in a position associated with the engagement position of the snap-locking piston (54).

**2.** The directional control valve according to claim 1, characterised in that the snap-locking piston (54) and the slide (60) are mechanically coupled to each other.

**3.** The directional control valve according to claim 1 or 2, characterised in that the snap-locking piston (54), the slide (60), the setting means (22) and the switching means (24) are preferably received in a housing bore (48) in a coaxial arrangement.

**4.** The directional control valve according to claim 3, characterised in that the diameter of the snap-locking piston (54) is smaller than that of the slide (60), and that the control pressure (p1) is supplied to the mutually adjacent front sides of the snap-locking piston (54) and of the slide (60).

**5.** The directional control valve according to claim 3 or 4, characterised in that the switching means (24) is a 3/2 way valve which, in its first switching position (a), relieves pressure from the slide rear side and in its second switching position (b) supplies the system pressure (p') to the slide rear side.

**6.** The directional control valve according to claim 5, characterised in that the slide (60) and preferably the setting means (22) are guided in a bush (50) which, in turn, is rotatably mounted in the housing (36) and forms a rotary slide of the directional control valve.

**7.** The directional control valve according to claim 6, characterised in that the snap-locking piston (54) is also guided in the bush (50).

**8.** The directional control valve according to one of claims 2 to 7, characterised in that the snap-locking piston (54) and the slide (60) are connected through a tie rod (56) which is fastened in the snap-locking piston (54) and which comprises an engaging collar (58) formed at an axial distance from a stop surface of the slide (60) so that the latter, following a predetermined dead stroke, may be brought into contact with the engaging collar (58).

**9.** The directional control valve according to one of claims 4 to 8, characterised in that the control pressure (p1) and the system pressure (p') are equal to the system pressure prevailing at a work port (A, B) of the directional control valve (4).

**10.** The directional control valve according to one of the preceding claims, characterised in that the axial displacement of snap-locking piston (54) and slide (60) is orthogonal to the axial displacement of the directional control valve slide (6).

**11.** The directional control valve according to one of the preceding claims, characterised in that the snap-locking piston (54) is biased towards a mechanical stop (26) through the control pressure (p1).

**12.** The directional control valve according to one of the preceding claims, characterised in that the switching means (24) may be actuated by remote control.

**13.** An arrangement comprised of snap-locking means, a kick-out arrangement (16) and switching means (24),

wherein the snap-locking means (2) include an engagement part (8) whose snap-locking piston (54) enables biasing of an engagement member (12) into its engagement position by means of a detent spring (10),
wherein a control pressure (p1) may be applied to the slide (60) of the kick-out arrangement (16) to cancel the locking engagement, and the kick-out arrangement (16) is associated with setting means (22) which act on a kick-out spring (20), whereby a triggering force for the kick-out arrangement (16) may be preset,
wherein a system pressure (p') counteracting the control pressure (p1) may be supplied to the slide (60) so that the slide (60), independently of the setting of the setting means (22), remains in a position associated with the engagement position of the snap-locking piston (54), and
wherein the snap-locking piston (54) and the slide (60) are coupled to each other through a tensile connection (56).

**14.** The arrangement according to claim 13, wherein the snap-locking piston (54) has a smaller diameter than the slide (60) and includes a control pressure port ($X_1$, $X_2$) whereby a control pressure (p') may be applied to the mutually adjacent front sides of slide (60) and snap-locking piston (54), and the kick-out arrangement (16) includes a kick-out spring (20) which acts on a front side of the slide (60) located opposite from the .

**15.** The arrangement according to claim 14, wherein the snap-locking piston (54), the slide (60), the setting means (22) and a setting member (50) of the switching means (24) are essentially arranged in a common valve bore (48).

**Revendications**

**1.** Distributeur comportant un dispositif d'encliquetage (2) pour déterminer un tiroir de distributeur (6) dans au moins une position de commutation, le dispositif d'encliquetage (2) présentant une partie d'encliquetage (8) moyennant le piston d'encliquetage (54) de laquelle une partie d'engagement (12) peut être précontrainte par l'intermédiaire d'un ressort d'encliquetage (10) dans sa position d'encliquetage, lequel distributeur comportant un arrangement de kickout (16) sur le tiroir (60) duquel une pression de commande (p1) peut s'exercer pour dégager l'engagement d'encliquetage, l'arrangement de kickout (16) étant associé à un dispositif de réglage (22) agissant sur un ressort de kickout (20), moyennant lequel une force de déclenchement de l'arrangement de kickout (16) peut être préréglée, caractérisé en ce qu'un dispositif de commutation (24) moyennant lequel une pression de système (p') peut être amenée au tiroir (60), qui agit contre la pression de commande (p1) de sorte que le tiroir (60) reste dans la position associée à la position d'encliquetage du piston d'encliquetage (54) indépendamment du réglage du dispositif de réglage (22).

**2.** Distributeur selon la revendication 1, caractérisé en ce que le piston d'encliquetage (54) et le tiroir (60) sont accouplés mécaniquement.

**3.** Distributeur selon les revendications 1 ou 2, caractérisé en ce que le piston d'encliquetage (54), le tiroir (60), le dispositif de réglage (22) et le dispositif de commutation (24) sont reçus dans un alésage de boîtier (48) de préférence en position réciproquement coaxiale.

**4.** Distributeur selon la revendication 3, caractérisé en ce que le diamètre du piston d'encliquetage (54) est inférieur à celui du tiroir (60) et que la pression de commande (p1) est amenée aux faces frontales réciproquement voisines du piston d'encliquetage (54) et du tiroir (60).

**5.** Distributeur selon la revendication 3 ou 4, caractérisé en ce que le dispositif de commutation (24) est un distributeur à 3/2 voies qui dans sa première position de commutation (a) décharge la face arrière du tiroir de la pression et dans sa seconde position de commutation (b) amène la pression de système (p') à la face arrière du tiroir.

**6.** Distributeur selon la revendication 5, caractérisé en ce que le tiroir (60) et de préférence le dispositif de réglage (22) sont guidés dans une douille (50) qui à son tour est logée de manière à pouvoir tourner dans le boîtier (36) et forme un tiroir tournant du distributeur.

**7.** Distributeur selon la revendication 6, caractérisé en ce que le piston d'encliquetage (54) est également guidé dans la douille (50).

**8.** Distributeur selon l'une quelconque des revendications 2 à 7, caractérisé en ce que le piston d'encliquetage (54) et le tiroir (60) sont raccordés par l'intermédiaire d'un tirant (56) qui est fixé dans le piston d'encliquetage (54) et qui présente un collet d'entraînement (58) qui est formé à une distance axiale par rapport à la surface de butée du tiroir (60) de sorte que celui-ci peut être amené après une course morte en apposition avec le collet d'entraînement (58).

**9.** Distributeur selon l'une quelconque des revendications 4 à 8, caractérisé en ce que la pression de commande (p1) et la pression de système (p') sont égales à la pression de système à un raccordement de travail (A, B) du distributeur (4).

**10.** Distributeur selon l'une quelconque des revendications précédentes, caractérisé en ce que le mouvement axial du piston d'encliquetage (54) et du tiroir (60) se situe à angle droit par rapport au mouvement axial du tiroir du distributeur (6).

**11.** Distributeur selon l'une quelconque des revendications précédentes, caractérisé en ce que le piston d'encliquetage (54) est précontraint contre une butée mécanique (26) par la pression de commande (p1).

**12.** Distributeur selon l'une quelconque des revendications précédentes, caractérisé en ce que le dispositif de commutation (24) peut être actionné moyennant une télécommande.

**13.** Arrangement consistant en un dispositif d'encliquetage, un arrangement de kickout (16) et un dispositif de commutation (24), un dispositif d'encliquetage (2) présentant une partie d'encliquetage (8) moyennant le piston d'encliquetage (54) de laquelle une partie d'engagement (12) peut être précontrainte au moyen d'un ressort d'encliquetage (10) dans sa position d'encliquetage, un tiroir (60) de l'arrangement de kickout (16) pouvant être exposé à une pression de commande (p1) pour dégager l'engagement d'encliquetage, et un dispositif de réglage (22) qui agit sur un ressort de kickout (20) étant associé à l'arrangement de kickout (16), moyennant lequel la force de déclenchement de l'arrangement de kickout (16) peut être préréglée,

une pression de système (p') pouvant être amenée au tiroir (60) moyennant le dispositif de commutation (24) qui agit contre la pression de commande (p1) de sorte que le tiroir (60) reste dans une position associée à la position d'encliquetage du piston d'encliquetage (54) indépendamment du réglage du dispositif de réglage (22), et

le piston d'encliquetage (54) et le tiroir (60) étant réciproquement accouplés moyennant un raccord de traction (56).

**14.** Arrangement selon la revendication 13, le piston d'encliquetage (54) présentant un diamètre inférieur à celui du tiroir (60), moyennant un raccordement de pression de commande ($X_1$, $X_2$) une pression de commande (p1) pouvant s'exercer sur les faces avant réciproquement voisines du tiroir (60) et du piston d'encliquetage (54), et l'arrangement de kickout (16) présentant un ressort de kickout (20) qui agit sur une face du tiroir (60) située à l'opposé du piston d'encliquetage (54).

**15.** Arrangement selon la revendication 14, le piston d'encliquetage (54), le tiroir (60), le dispositif de réglage (22) et l'élément de réglage (50) du dispositif de commutation (24) étant essentiellement disposés dans un alésage de distributeur commun (48).

24
22
20
16
X4
X3
EIN
A
AUS
T
P'
X1
X2
8
18
2
26
19
10
12
14
6
4

FIG.1

66
36
50
X5
T
64
48

FIG. 3

36
41
34
12
14
53
54
50
56
48
20
62
52
P1
60
A
T
24
2
72
22
70
68
74
16
58
X5
X
X1
X2
10
38
8
46
40
P
P'
T
B
32
30
A
42
44
6
28
4

FIG.2

36
78
54
82
80
76
FIG. 4
22
20
T
X1, X2
60
X5
B
P
P'
A
T